# EUROPÄISCHE PATENTSCHRIFT

(11) **EP 2 823 970 B1**
(45) Veröffentlichungstag und Bekanntmachung des Hinweises auf die Patenterteilung: **11.09.2019**
(21) Anmeldenummer: 14174060.5
(22) Anmeldetag: 26.06.2014
(51) Int. Cl.: B60B 3/12, B60B 7/01, B60B 7/02, B60B 7/06

(54) **Ring für ein Rad sowie Rad mit einem solchen Ring**
Ring for a wheel, and wheel having such a ring
Anneau pour une roue et roue équipée d'un tel anneau

(30) Priorität: 08.07.2013 DE 102013213356
(43) Veröffentlichungstag der Anmeldung: 14.01.2015
(73) Patentinhaber: BBS Motorsport GmbH, 77716 Haslach im Kinzigtal (DE)
(72) Erfinder: Wurft, Jörg, 77761 Schiltach (DE); Müller, Roman, 77761 Schiltach (DE)
(74) Vertreter: Westphal, Mussgnug & Partner Patentanwälte mbB

(56) Entgegenhaltungen:
- DE-A1- 19 533 612
- FR-A3- 2 960 182
- US-A- 5 630 654
- US-A1- 2002 153 763

## Beschreibung

Die Erfindung betrifft einen Ring für ein Rad, insbesondere für eine Radfelge eines Leichtmetallrads von Kraftfahrzeugen, sowie ein Rad mit einem solchen Ring.

Radfelgen bekannter Räder weisen ein Felgeninnenbett und ein Felgenaußenbett auf. Das Felgeninnenbett ist - wenn das Rad an einem Kraftfahrzeug montiert ist - dem Kraftfahrzeug zugewandt angeordnet und geht in ein Felgeninnenhorn über. Das Felgenaußenbett geht gegenüberliegend in ein Felgenaußenhorn über. Die Radfelge weist axial innen zumindest eine umlaufende Kontur auf.

Es ist ferner bekannt, einen Ring radial innen oder radial außen gegen eine Kontur der Radfelge abzustützen. Die WO 2001/17799 A1 schlägt Halbschalen vor, die im Bereich des Felgeninnenbetts bzw. Felgenaußenbetts eingesetzt und mittels geeigneter Befestigungsmethoden sowohl miteinander als auch mit den angrenzenden Elementen des Rades verbunden werden. Die Fertigung und der Zusammenbau derart gestalteter Räder erweist sich jedoch als relativ aufwendig und kostspielig.

Gemäß dem in der WO 2005/123418 vorgeschlagenen Verfahren wird in einem Bereich einer Radinnenseite und / oder einer Radaußenseite eine in Umfangsrichtung zumindest abschnittsweise durchgehende Hohlkammer gebildet, die in einem Bereich des Felgeninnenbetts bzw. Felgenaußenbetts von einer Profilwand begrenzbar ist. Dabei ist die Profilwand einstückig mit der Felge ausgebildet oder es wird eine separate Profilwand zum Schaffen einer Hohlkammer in ein Profil eingesetzt.

Aus der US 5,630,654 ist es weiterhin bekannt, Hohlräume an verschiedenen Stellen eines standardisierten Stahlrades auszubilden. Diese Hohlräume entstehen durch Ausbildung von dekorative Oberflächen bildenden Strukturen, die separat gefertigt und danach an bestimmten Bereichen des Stahlrades angebracht werden können, beispielsweise auch im Bereich eines Felgenaußenhorns.

Ein gattungsgemäßer Ring für ein Rad ist schließlich aus der DE 195 33 612 A1 bekannt, von der die Erfindung ausgeht.

Der Erfindung liegt die Aufgabe zugrunde, bekannte Radfelgen zu verbessern, insbesondere hinsichtlich Fertigungs- und/oder Montageverfahren, ihrer Statik, möglichst auch hinsichtlich ihres Gewichts und hinsichtlich der durch die Radfelge bzw. das Rad verursachten Abrollgeräusche.

Die Aufgabe wird erfindungsgemäß gelöst durch einen Ring mit den Merkmalen des Anspruchs 1 sowie ein Rad mit den Merkmalen des Anspruchs 5.

Vorteilhafte Ausführungsformen sind in den jeweiligen Unteransprüchen angegeben.

Der Erfindungsgemäße Ring weist eine Bettlippe auf, die bis zum Felgeninnenbett hinreicht. Die Bettlippe kann erfindungsgemäß auch das Felgeninnenbett zumindest teilweise überlappen. Der Ring weist ferner, der Bettlippe abgewandt, eine dem Felgeninnenhorn in seiner radial inneren Oberflächenform nachempfundene Hornlippe auf. In einem Hohlraumbereich zwischen der Bettlippe und der Hornlippe ist der Ring wenigstens abschnittsweise doppelwandig ausgeführt oder so ausgebildet, dass in einem montierten Zustand gemeinsam mit der Radfelge eine Doppelwand besteht.

Erfindungsgemäß verlaufen in dem Hohlraum-Bereich radial innen eine innere Wand und radial außen eine äußere Wand im Wesentlichen parallel zueinander. Zwischen der äußeren Wand und der inneren Wand sind in radialer Richtung ausgerichtete Radialwände angeordnet, so dass ein Hohlraum mit einem im Wesentlichen rechteckigen Querschnitt gebildet ist.

Mit einem solchen Ring kann eine Radfelge in Ihrem axial inneren Bereich aufgewölbt werden. Dies gelingt erfindungsgemäß, ohne insgesamt gesehen ein zusätzliches Gewicht einzuführen. Erfindungsgemäße Radfelgen mit einem solchen Ring haben gegenüber gleich steifen Radfelgen etwa 10 % Gewichtsersparnis.

Der doppelwandige Bereich in dem Hohlraum-Bereich muss erfindungsgemäß nicht als ein vollständig geschlossenes Profil ausgeführt sein. Es kann - besonders fertigungstechnisch - vorteilhaft sein, eine Wand als ein freies Ende auszuführen, so dass keine geschlossene Hohlkammer realisiert ist.

Eine Abstützung in radialer Richtung an wenigstens zwei Stellen ist statisch von Vorteil.

Gemäß einer vorteilhaften Ausführungsform ist der Ring abschnittsweise als Hohlprofil mit mindestens einer geschlossenen Hohlkammer ausgeführt. Es können in axialer Richtung mehrere geschlossene Hohlkammern nebeneinander angeordnet sein, wobei jede der mehreren Hohlkammern ohne Unterbrechung in Umfangsrichtung ausgeführt ist. Ebenso kann innerhalb einer umlaufenden Hohlkammer eine weitere radiale Wand die umlaufende Hohlkammer in mehrere UmfangsHohlkammern unterteilen.

Solche Hohlkammern sind mit einem fluiden Medium befüllbar.

Gemäß einer weiteren vorteilhaften Ausführungsform kann die Hohlkammer mit einem Dämmmaterial gefüllt werden, insbesondere mit einem Metallschaum oder einem Kunststoffschaum.

So kann eine Geräuschdämpfung erreicht werden.

Gemäß einer weiteren vorteilhaften Ausführungsform besteht der Ring zumindest teilweise aus Aluminium und / oder aus Kunststoff.

Ein gattungsgemäßes Rad, insbesondere ein Leichtmetallrad für Kraftfahrzeuge, besteht im Wesentlichen aus einem Radstern und einer Radfelge, wobei die Radfelge ein Felgeninnenbett und ein Felgenaußenbett aufweist, die in ein Felgeninnenhorn an einer Radinnenseite bzw. in ein Felgenaußenhorn an einer Radaußenseite übergehen, so dass die Radfelge axial innen eine umlaufende Kontur aufweist.

Ein mit dem erfindungsgemäßen Ring versehenes Rad zeichnet sich dadurch aus, dass die Sicherheit auch dann gewährleistet ist, wenn sich der Ring aus einem Verbund mit der Radfelge lösen sollte.

Ferner kann das Rad im Bereich der Radinnenseite und/oder der Radaußenseite eine in Umfangsrichtung zumindest abschnittsweise durchgehende Hohlkammer aufweisen, die im Bereich des Felgeninnenbetts bzw. des Felgenaußenbetts von einer Profilwand begrenzbar ist. Dann ist erfindungsgemäß die Hohlkammer oder eine weitere Hohlkammer in einem separaten Ring ausgebildet, der mit dem Rad verbindbar ist.

Gemäß einer vorteilhaften Ausführungsform eines erfindungsgemäßen Rads ist der Ring in die Radfelge geklebt und / oder geschweißt.

Für Klebeverbindungen ist jeweils ein definierter Klebespalt vorgesehen, für Schweißverbindungen eine definierte Schweißstelle. Bekannte Klebesysteme härten im Lackierprozess aus.

Auf diese Art und Weise ist eine sichere Verbindung zwischen Ring und Radfelge gewährleistet.

Gemäß einer weiteren vorteilhaften Ausführungsform sind als korrespondierende Verbindungsflächen ausschließlich die Bettlippe und das Felgeninnenbett sowie die Hornlippe und das Felgeninnenhorn ausgeführt. Die Verbindung des Rings mit der Radfelge ist ausschließlich über die korrespondierenden Verbindungsflächen hergestellt, so dass zwischen Ring und Radfelge, radial außerhalb des Hohlraum-Bereichs, ein weiterer Hohlraum-Bereich gebildet ist.

Nachfolgend wird unter Bezugnahme auf Figuren ein Ausführungsbeispiel der erfindungsgemäßen Radfelge näher erläutert. Gleiche Bezugszeichen sind für gleiche Teile vergeben. Der besseren Übersicht halber sind nicht alle Bezugszeichen in allen Figuren eingetragen.

Es ist ein klassisches Speichendesign mit Y-förmig verlaufenden Speichenstegen gewählt, um die Erfindung zu erläutern. Erfindungsgemäß können alternativ sämtliche Arten von Radsternen oder äquivalenten Radelementen Einsatz finden können.

Es zeigen:
- Figur 1: einen Schnitt durch ein erfindungsgemäßes Rad mit einem erfindungsgemäßen Ring nach einem ersten Ausführungsbeispiel,
- Figur 2: einen vergrößerten Ausschnitt des erfindungsgemäßen Rads aus Figur 1,
- Figur 3: eine perspektivische Ansicht auf ein radial geschnittenes, erfindungsgemäßes Rad und einen axial dazu ausgerichteten erfindungsgemäßen Ring in Explosionsdarstellung, ebenfalls als Ausschnitt in vergrößerter Darstellung,
- Figur 4: einen ähnlich der Figur 2 vergrößerten Ausschnitt eines Schnitts durch ein erfindungsgemäßes Rad mit einem erfindungsgemäßen Ring nach einem zweiten Ausführungsbeispiel und
- Figur 5: eine perspektivische Ansicht auf ein radial geschnittenes, erfindungsgemäßes Rad und einen axial dazu ausgerichteten erfindungsgemäßen Ring gemäß dem zweiten Ausführungsbeispiel aus Figur 4 in Explosionsdarstellung, ebenfalls als Ausschnitt in vergrößerter Darstellung.

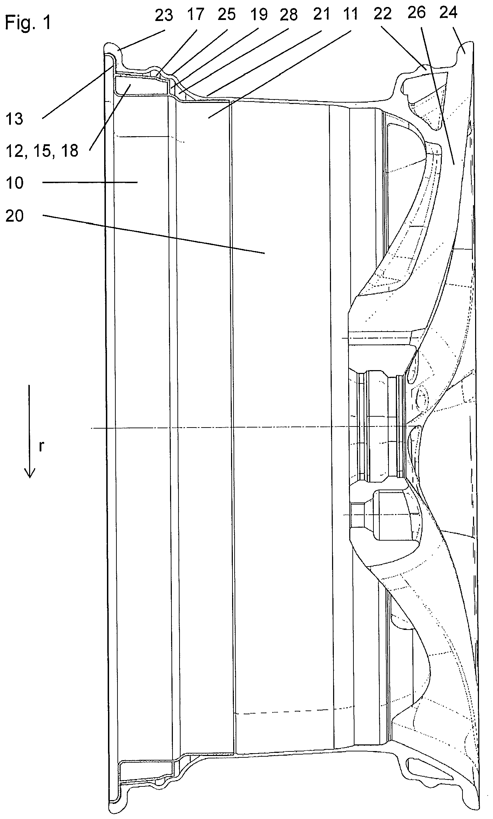

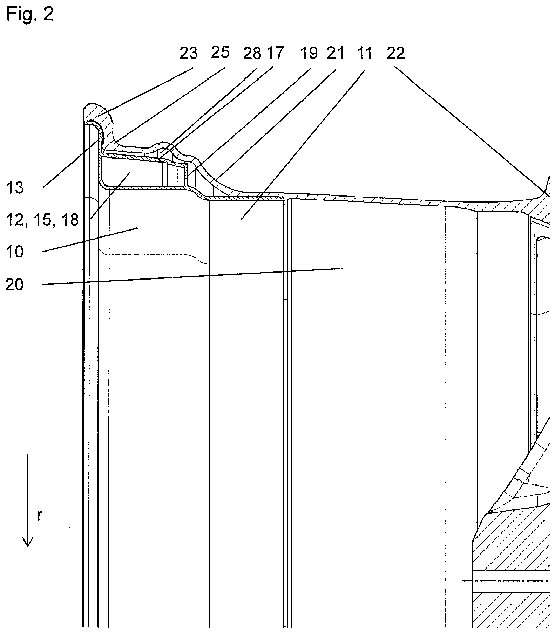

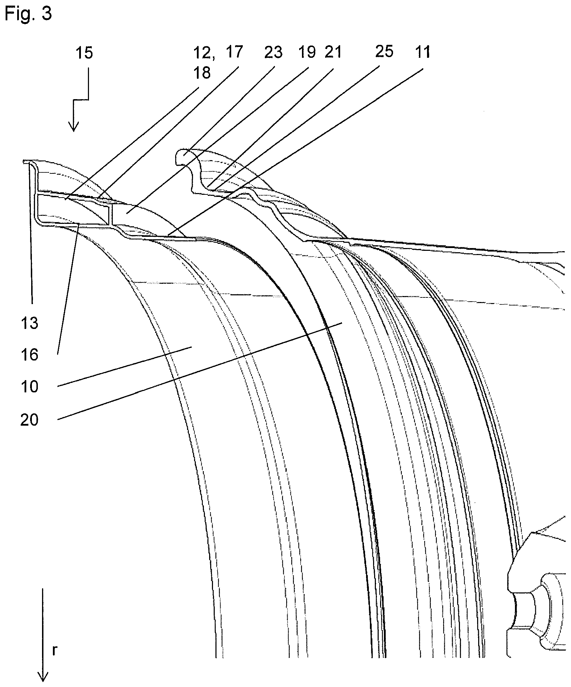

Eine Radfelge 20 eines erfindungsgemäßen Rads gemäß dem in den Figuren 1 bis 3 dargestellten ersten Ausführungsbeispiel findet insbesondere Verwendung in einem Leichtmetallrad für Kraftfahrzeuge. Die Radfelge 20 weist ein Felgeninnenbett 21 und ein Felgenaußenbett 22 auf. Das Felgeninnenbett 21 geht in ein in einem an ein nicht dargestelltes Kraftfahrzeug montierten Zustand dem Kraftfahrzeug zugewandt angeordnetes Felgeninnenhorn 23 über. Das Felgenaußenbett 22 geht in ein Felgenaußenhorn 24 über. Die Radfelge 20 weist demnach axial innen eine umlaufende Kontur 25 auf.

Ein erfindungsgemäßer Ring 10 ist in die Kontur 25 eingesetzt. Somit ist der Ring 10 einem üblicherweise verbauten Radstern 26 gegenüber angeordnet.

Der Ring 10 weist eine Bettlippe 11 auf, die bis zum Felgeninnenbett 21 hinreicht oder derart ausgeführt ist, dass das Felgeninnenbett 21 teilweise überlappt wird. Der Ring 10 weist ferner der Bettlippe 11 abgewandt eine dem Felgeninnenhorn 23 in seiner radial inneren Oberflächenform nachempfundene Hornlippe 13 auf. Zwischen der Bettlippe 11 und der Hornlippe 13 ist der Ring in einem Hohlraum-Bereich 15 wenigstens abschnittsweise doppelwandig ausgeführt.

Gemäß dem Ausführungsbeispiel verlaufen in dem Hohlraum-Bereich 15 radial innen eine innere Wand 16 und radial außen eine äußere Wand 17 im Wesentlichen parallel zueinander. Je schräger die umlaufende Kontur 25 ausgebildet ist, desto schräger und weniger parallel bzw. axial verläuft die äußere Wand 17. Zwischen der äußeren Wand 17 und der inneren Wand 16 sind in radialer Richtung r ausgerichtete Radialwände 19 angeordnet. Verbindungsstellen zwischen den Wänden 16, 17, 19 sind abgerundet ausgeführt. Die Radialwände 19 spielen statisch eine bedeutsame Rolle. Auf die äußere Wand 17 kann möglicherweise verzichtet werden.

Im Inneren der Wände 16, 17, 19 ist ein Hohlraum 18 mit einem im Wesentlichen rechteckigen Querschnitt gebildet, präziser etwa ein Trapez, je nach Steigung der umlaufenden Kontur 25. Ein vollständiges Verschließen des Querschnitts mittels der äußeren Wand 17 kann auch durch ein direktes Verschweißen der Radialwände 19 mit der Radfelge 20 erreicht werden.

Der Ring 10 ist demnach ein Hohlprofil mit optimiertem Gewicht. Dazu sind gemäß dem Ausführungsbeispiel geschlossene Hohlkammern bzw. eine einzige umlaufende geschlossene Hohlkammer 12 ausgeführt, die mit einem fluiden Medium befüllt werden können. Zur Geräuschminderung kann die Hohlkammer 12 vorteilhaft mit einem Dämmmaterial gefüllt werden.

Der Ring 10 besteht in dem Ausführungsbeispiel aus Aluminium. Alternativ sind Ausführungen aus Kunststoff oder auch Materialkombinationen von Kunststoff und Metall denkbar.

Der Ring 10 wird gemäß dem vorliegenden Ausführungsbeispiel in die Radfelge 20 geklebt. Dazu ist zwischen zwei korrespondierenden Verbindungsflächen - Bettlippe 11 mit Felgeninnenbett 21 und Hornlippe 13 mit Felgeninnenhorn 23 - jeweils ein Klebespalt definiert. Es kann somit ein Klebesystem verwendet werden, welches in einem Lackierprozess aushärtet.

Zwischen den korrespondierenden Verbindungsflächen ist ein weiterer Hohlraum-Bereich 28 gebildet. Hierdurch kann eine Deformation der Radfelge stattfinden, ohne dass hiervon eine korrespondierende Fläche des Rings 10 getroffen ist. Dies dient der Robustheit der Klebeverbindung.

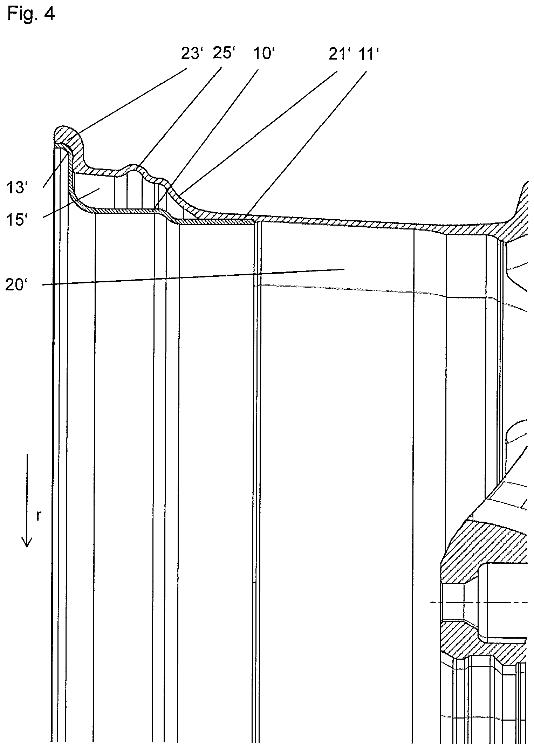

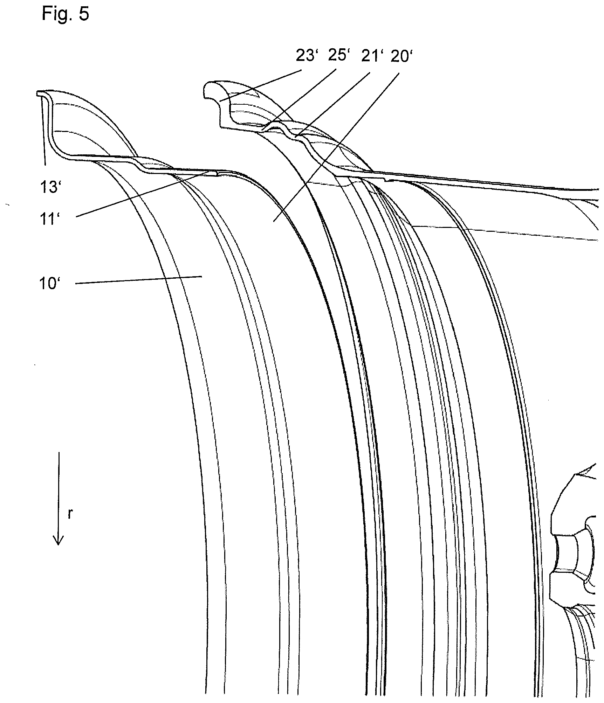

In den Figuren 4 und 5 ist ein erfindungsgemäßes Rad gemäß einem zweiten Ausführungsbeispiel dargestellt. Das Rad besteht dabei ähnlich dem ersten Ausführungsbeispiel aus einer Radfelge 20', in die axial außen ein Ring 10' eingesetzt (Fig. 4) bzw. einsetzbar (Fig. 5) ist. Der Ring 10' schmiegt sich ebenfalls erfindungsgemäß mit seiner Hornlippe 13' und seiner Bettlippe 11' in die bereits in einem dem Einsetzen vorangehenden Fertigungsschritt ausgebildeten Kontur 25' an.

Im Unterschied zum ersten Ausführungsbeispiel bildet der Ring 10' gemeinsam mit der Radfelge 20' einen Hohlraum im Hohlraum-Bereich 15'. In dem Hohlraumbereich 15' ist der Ring 10' radial von der Radfelge 20' beabstandet ausgeführt.

### Bezugszeichenliste

- 10, 10': Ring
- 11, 11': Bettlippe
- 12: Hohlkammer
- 13, 13': Hornlippe
- 15, 15': Hohlraum-Bereich
- 16: innere Wand
- 17: äußere Wand
- 18: Hohlraum

- 20, 20': Radfelge
- 21, 21': Felgeninnenbett
- 22: Felgenaußenbett
- 23, 23': Felgeninnenhorn
- 24: Felgenaußenhorn
- 25, 25': umlaufende Kontur
- 26, 26': Radstern
- 28: weiterer Hohlraum-Bereich

- r: radiale Richtung

## Patentansprüche

1. Ring (10, 10') für eine Radfelge (20, 20') eines Rads, insbesondere für eine Radfelge eines Leichtmetallrads für Kraftfahrzeuge, wobei die Radfelge (20, 20') ein Felgeninnenbett (21, 21') und ein Felgenaußenbett (22) aufweist, die jeweils in ein einem Kraftfahrzeug in einem montierten Zustand zugewandt angeordneten Felgeninnenhorn (23, 23') bzw. in ein Felgenaußenhorn (24) übergehen, so dass die Radfelge (20, 20') axial innen eine umlaufende Kontur (25, 25') aufweist, wobei
- der Ring (10, 10') eine Bettlippe (11, 11') aufweist, die bis zum Felgeninnenbett (21, 21') reicht oder das Felgeninnenbett (21, 21') teilweise überlappend ausgeführt ist, und dass
- der Ring (10, 10') der Lippe (11, 11') abgewandt eine dem Felgeninnenhorn (23, 23') in dessen radial inneren Oberflächenform nachempfundene Hornlippe (13, 13') aufweist, und dass
- der Ring (10, 10') in einem Hohlraum-Bereich (15, 15') zwischen der Bettlippe (11, 11') und der Hornlippe (13, 13') wenigstens abschnittsweise doppelwandig (16, 17) ausgeführt ist und/oder zumindest von der Radfelge (20') radial beabstandet ausgeführt ist,
**dadurch gekennzeichnet, dass** in dem Hohlraum-Bereich (15) radial innen eine innere Wand (16) und radial außen eine äußere Wand (17) im Wesentlichen parallel verlaufen und zwischen der äußeren Wand (17) und der inneren Wand (16) in radialer Richtung ausgerichtete Radialwände (19) angeordnet sind, so dass ein Hohlraum (18) mit einem im Wesentlichen rechteckigen Querschnitt gebildet ist.

2. Ring (10) nach Anspruch 1,
**dadurch gekennzeichnet, dass** der Ring (10) abschnittsweise als Hohlprofil mit mindestens einer vollständig geschlossenen Hohlkammer (12) ausgeführt ist.

3. Ring (10) nach Anspruch 2,
**dadurch gekennzeichnet, dass** die Hohlkammer (12) mit einem Dämmmaterial gefüllt ist, insbesondere mit einem Metallschaum oder einem Kunststoffschaum.

4. Ring (10, 10') nach einem der vorangehenden Ansprüche,
**dadurch gekennzeichnet, dass** der Ring (10, 10') zumindest teilweise aus Aluminium und / oder aus Kunststoff besteht.

5. Rad, insbesondere Leichtmetallrad für Kraftfahrzeuge, bestehend im Wesentlichen aus einem Radstern (26) und einer Radfelge (20, 20'), wobei die Radfelge (20, 20') ein Felgeninnenbett (21, 21') und ein Felgenaußenbett (22) aufweist, die in ein Felgeninnenhorn (23, 23') an einer Radinnenseite bzw. in ein Felgenaußenhorn (24) an einer Radaußenseite übergehen, so dass die Radfelge (20, 20') axial innen eine umlaufende Kontur (25, 25') aufweist, **dadurch gekennzeichnet, dass** auf der Radinnenseite ein Ring (10, 10') nach einem der Ansprüche 1 bis 4 angeordnet ist.

6. Rad nach Anspruch 5,
**dadurch gekennzeichnet, dass** der Ring (10, 10') in der Kontur (25, 25') wenigstens abschnittsweise anliegend in die Radfelge (20, 20') geklebt und / oder geschweißt ist.

7. Rad nach einem der Ansprüche 5 oder 6,
**dadurch gekennzeichnet, dass** als korrespondierende Verbindungsflächen ausschließlich die Bettlippe (11, 11') und das Felgeninnenbett (21, 21') und die Hornlippe (13, 13') und das Felgeninnenhorn (23, 23') ausgeführt sind und die Verbindung des Rings (10, 10') mit der Radfelge (20, 20') ausschließlich über die korrespondierenden Verbindungsflächen hergestellt ist, so dass im Fall des Rings (10) mit doppelwandiger Ausbildung radial außerhalb des Hohlraum-Bereichs (15) ein weiterer Hohlraum-Bereich (28) gebildet ist.

## Claims

1. Ring (10, 10') for a wheel rim (20, 20') of a wheel, particularly for a wheel rim of an alloy wheel for motor vehicles, wherein the wheel rim (20, 20') has an inner rim well (21, 21') and an outer rim well (22), which in each case merge into an inner rim flange (23, 23') arranged facing a motor vehicle in a mounted state or, respectively, into an outer rim flange (24), so that the wheel rim (20, 20') has a circumferential contour (25, 25') on the axially inner side, wherein
- the ring (10, 10') has a well lip (11, 11') which extends up to the inner rim well (21, 21') or is designed to partially overlap the inner rim well (21, 21'), and wherein
- the ring (10, 10') has, facing away from the lip (11, 11'), a flange lip (13, 13') which is adapted to the shape of the radially inner radial surface of the inner rim flange (23, 23'), and wherein
- the ring (10, 10') is designed to be at least partially double-walled (16, 17) in a hollow chamber region (15, 15') between the well lip (11, 11') and the flange lip (13, 13') and/or is designed to be radially spaced apart from the wheel rim (20'),
**characterised in that** in the hollow chamber region (15) an inner wall (16) on the radially inner side and an outer wall (17) on the radially outer side extend substantially parallel, and radial walls (19) aligned in the radial direction are arranged between the outer wall (17) and the inner wall (16), so that a hollow chamber (18) having a substantially rectangular cross-section is formed.

2. Ring (10) according to claim 1, **characterised in that** the ring (10) is designed partially as a hollow profiled section having at least one completely closed hollow chamber (12).

3. Ring (10) according to claim 2, **characterised in that** the hollow chamber (12) is filled with an insulating material, in particular with a metal foam or a plastic foam.

4. Ring (10, 10') according to any one of the preceding claims, **characterised in that** the ring (10, 10') is made at least partially from aluminium and/or plastic.

5. Wheel, in particular an alloy wheel for motor vehicles, consisting substantially of a wheel spider (26) and a wheel rim (20, 20'), wherein the wheel rim (20, 20') has an inner rim well (21, 21') and an outer rim well (22) which merge into an inner rim flange (23, 23') on an inner side of the wheel or respectively into an outer rim flange (24) on the outer side of the wheel, so that the wheel rim (20, 20') has a circumferential contour (25, 25') on the axially inner side, **characterised in that** a ring (10, 10') according to any one of claims 1 to 5 is arranged on the inner side of the wheel.

6. Ring according to claim 5, **characterised in that** the ring (10, 10') rests at least partially in the contour (25, 25') and is glued and/or welded into the wheel rim (20, 20').

7. Wheel according to any one of claims 5 or 6, **characterised in that** exclusively the well lip (11, 11') and the inner rim well (21, 21') and the flange lip (13, 13') and the inner rim flange (23, 23') are designed as corresponding connecting surfaces, and the connection of the ring (10, 10') to the wheel rim (20, 20') is produced exclusively via the corresponding connecting surfaces, so that in the case of the ring (10) a further hollow chamber region (28) is formed radially outside the hollow chamber region (15).

## Revendications

1. Anneau (10, 10') destiné à une jante (20, 20') d'une roue, en particulier à une jante d'une roue en métal léger d'un véhicule automobile, la jante de roue (20, 20') comprenant une base de jante interne (21, 21') et une base de jante externe (22) qui se prolongent respectivement par un rebord de jante interne (23, 23') tourné vers le véhicule à l'état monté ou par un rebord de jante externe (24) de sorte que la jante de roue (20, 20') ait axialement vers l'intérieur un contour circonférentiel (25, 25'),
- l'anneau (10, 10') comportant une lèvre de base (11, 11') qui arrive jusqu'à la base de jante interne (21, 21'), ou, est réalisé de façon à chevaucher partiellement la base de jante interne (21, 21'), et
- l'anneau (10, 10') comportant, à l'opposé de la lèvre (11, 11') une lèvre de rebord (13, 13') se conformant à la forme de la surface radiale interne au rebord de jante interne (23, 23'), et
- l'anneau (10, 10') étant réalisé, dans une zone de cavité (15, 15') entre la lèvre de base (11, 11') et la lèvre de rebord (13, 13'), au moins par segments avec une double paroi (16, 17) et/ou étant situé au moins à distance radiale de la jante de roue (20'), **caractérisé en ce que**
dans la zone de la cavité (15) s'étendent essentiellement parallèlement, radialement vers l'intérieur une paroi interne (16) et radialement vers l'extérieur une paroi externe (17), et entre la paroi externe (17) et la paroi interne (16) sont installées des parois radiales (19) orientées en direction radiale de façon à obtenir une cavité (18) ayant une section essentiellement rectangulaire.

2. Anneau (10) conforme à la revendication 1,
**caractérisé en ce qu'**
il est réalisé, par segments, sous la forme d'un profilé creux ayant au moins une chambre creuse (12) totalement fermée.

3. Anneau (10) conforme à la revendication 2,
**caractérisé en ce que**
la chambre creuse (12) est remplie d'un matériau d'amortissement, en particulier d'une mousse métallique ou d'une mousse en matériau synthétique.

4. Anneau (10, 10') conforme à l'une des revendications précédentes, **caractérisé en ce qu'**
il est réalisé au moins partiellement en aluminium et/ou en matériau synthétique.

5. Roue, en particulier roue en métal léger d'un véhicule automobile essentiellement constituée d'une étoile de roue (26) et d'une jante de roue (20, 20'), la jante de roue (20, 20') comprenant une base de jante interne (21, 21') et une base de jante externe (22) qui se prolongent par un rebord de jante interne (23, 23') sur la face interne de la roue ou par un rebord de jante externe (24) sur la face externe de la roue de sorte que la jante de roue (20, 20') ait axialement vers l'intérieur un contour circonférentiel (25, 25'),
**caractérisée en ce que**
sur la face interne de la roue est installé un anneau (10, 10') conforme à l'une des revendications 1 à 4.

6. Roue conforme à la revendication 5,
**caractérisée en ce que**
l'anneau (10, 10') est collé et/ou soudé dans la jante de roue (20, 20') en s'appliquant au moins par segments sur le contour (25, 25').

7. Roue conforme à l'une des revendications 5 et 6,
**caractérisée en ce qu'**
en tant que surfaces de liaison correspondantes, sont exclusivement formées la lèvre de base (11, 11') et la base de jante interne (21, 21') et la lèvre de rebord (13, 13') et le rebord de jante interne (23, 23'), et la liaison de l'anneau (10, 10') avec la jante de roue (20, 20') est exclusivement obtenue par l'intermédiaire des surfaces de liaison correspondantes, de sorte que, dans le cas d'un anneau (10) à double paroi, radialement à l'extérieur de la zone de cavité (15), soit formée une autre zone de cavité (28).
